Europäisches Patentamt

European Patent Office

Office européen des brevets

(11) Publication number: **0 509 140 A1**

# EUROPEAN PATENT APPLICATION

(21) Application number: **91119833.1**

(22) Date of filing: **19.11.91**

(51) Int. Cl.5: **G06F 13/42**

(30) Priority: **16.04.91 JP 112581/90**

(43) Date of publication of application:
**21.10.92 Bulletin  92/43**

(84) Designated Contracting States:
**DE FR GB**

(71) Applicant: **OTARI INC.**
**4-33-3 Kokurycho**
**Chofu-shi, Tokyo 182(JP)**

(72) Inventor: **ITO, MASAYUKI,**
**C/O OTARI, INC. 4-33-3 KOKURYOCHO**
**CHOFU-SHI, TOKYO 182(JP)**

(74) Representative: **Münich, Wilhelm, Dr. et al**
**Kanzlei Münich, Steinmann, Schiller**
**Willibaldstrasse 36/38**
**W-8000 München 21(DE)**

(54) **Data bus system.**

(57) A data bus system having a data bus which carries a synchronizing signal and to which a plurality of devices are connected so that they will exchange data therebetween via the data bus in accordance with control signals from a system controller. The data bus uses a constant period frame clock signal as the synchronizing signal to transfer, during a period of the frame clock signal, an information frame divided by time into a plurality of blocks having block addresses defined thereto on the time base of the period. The devices send and receive data to and from the information frame transferred over the data bus in synchronism with the frame clock signal. The controller selects any of the devices and notifies the selected devices of the block addresses of destination blocks in the information frame. The destination blocks send and receive data to and from the selected devices. The selected devices send and receive data over the data bus to and from the blocks having the block addresses designated by the controller. This data bus system easily configures a complex system comprising numerous devices. When the system controller places simple control information onto the data bus, the component devices are thereby combined flexibly and the data flow therebetween is manipulated freely and in a highly adaptable manner.

FIG.2

## BACKGROUND OF THE INVENTION:

The present invention relates to a data bus system to which a plurality of devices are connected so that they will exchange data therebetween. More particularly, the invention relates to a data bus system for use with a digital signal processing system that converts analog signals to digital format for signal processing.

### Description of the Prior Art:

An audio signal editing system is a typical digital signal processing system that converts analog signals to digital format for signal processing. Compared with analog signal editing systems, the digital audio signal editing system offers diverse kinds of signal processing capability in a significantly flexible manner.

One characteristic of the digital signal processing system is that the more functions it offers, the more devices it requires for signal processing. Another characteristic of this system is that signals it handles do not merely flow unidirectionally from the input to the output terminals. That is, the devices constituting the system generally exchange data therebetween. It is customary for a system made up of numerous devices to have a data bus system to which these devices are connected in parallel so as to maintain system flexibility.

In a digital signal processing system having a data bus system, each component device outputs and receives data to and from the data bus under control of a controller that opens and closes the data bus. This is a simplified system configuration that enhances system flexibility as well.

A large number of data bus systems have been known to be used in conjunction with the digital signal processing system that converts analog signals to digital format for signal processing. One variation of such digital signal processing system is disclosed in U.S.P. 4,991,486 and another in U.S.P. 4,991,487. These systems comprise a data bus to which numerous devices are connected. A CPU controls the entire system through the use of the data bus. The digital signal processing system disclosed in U.S.P. 4,991,487 illustratively works as follows: A ROM in a microcomputer constituting the system contains beforehand a main program, subprograms and interrupt programs. Using these programs, a CPU in the microcomputer cause such input-dedicated devices as a key switch circuit and operation switch circuit to input data. The data thus input and various kinds of information stored in the ROM are controlled and processed by the CPU using relatively complex routines. After that, the CPU outputs the processed signal to such output devices as a percussion sound signal generation circuit and a sound system. This means that these devices need to be functionally rigid and inflexible.

The above-described type of system is suitable for use as a digital signal processing system which, with its functionally fixed devices, is aimed at processing signals at high speed. One disadvantage of the data bus system used in connection with the above digital signal processing system is that the kinds of devices connectable to the data bus are limited. That is, the devices must be limited so that the CPU that controls the entire system will at least recognize them all. Another disadvantage is that where each kind of data is processed by a combination of devices, the programming for the CPU to control these devices tends to be complex.

## SUMMARY OF THE INVENTION:

It is therefore an object of the present invention to provide a data bus system which allows devices connectable to the data bus to be flexibly selected for connection thereto and to be readily combined to process particular kinds of signal data.

In carrying out the invention and according to one aspect thereof, there is provided a data bus system having a data bus to which a plurality of devices are connected to transfer a synchronizing signal therethrough, the devices exchanging data therebetween via the data bus in accordance with control signals from a controller for controlling the system. The data bus uses a constant period frame clock signal as the synchronizing signal to transfer, during a period of the frame clock signal, an information frame divided by time into a plurality of blocks having block addresses defined thereto on the time base of the period. The plurality of devices send and receive data to and from the information frame transferred over the data bus in synchronism with the frame clock signal. The controller selects any of the plurality of devices and notifies the selected devices of the block addresses of destination blocks in the information frame. The destination blocks send and receive data to and from the selected devices. The selected devices send and receive data via the data bus to and from the blocks having the block addresses designated by the controller.

According to another aspect of the invention, there is provided a data bus system wherein each component device comprises a synchronous circuit, a bus interface and a processor. The synchronous circuit generates a synchronizing signal in synchronism with the frame clock signal. The bus interface sends and receives data to and from the data bus under control of the synchronous circuit. The processor receives data from the bus interface, processes them, and sends them back to the bus interface.

According to a further aspect of the invention, there is provided a data bus system wherein the information frame comprises data blocks for handling data to and from the devices connected to the data bus, and control blocks for handling information for control over the devices.

In the data bus system of the above construction, when a device sends or receives data to or from the data bus, the controller supplies a block address defined on the time base of the frame clock signal to a control block of the information frame. The device sends or receives the data to or from the data block having the designated block address in synchronism with the frame clock signal on the data bus.

With all devices equally arranged in priority, a plurality of devices may freely exchange data with a plurality of data blocks. The only constraint is that two or more devices may not output the same data block at the same time.

Further objects, features and advantages of the invention will become more apparent upon a reading of the following description and appended drawings.

BRIEF DESCRIPTION OF THE DRAWINGS:

Fig. 1 is a block diagram of a data bus system embodying the present invention;

Fig. 2 is a view showing the relationship between a frame clock pulse and an information frame in connection with the embodiment;

Fig. 3 is a view depicting the relationship between a plurality of frame clock pulses and a plurality of information frames in connection with the embodiment;

Figs. 4, 5 and 6 are views illustrating how the embodiment at the data bus system works; and

Fig. 7 is a flowchart describing how the embodiment operates in a control block.

DETAILED DESCRIPTION OF THE PREFERRED EMBODIMENTS:

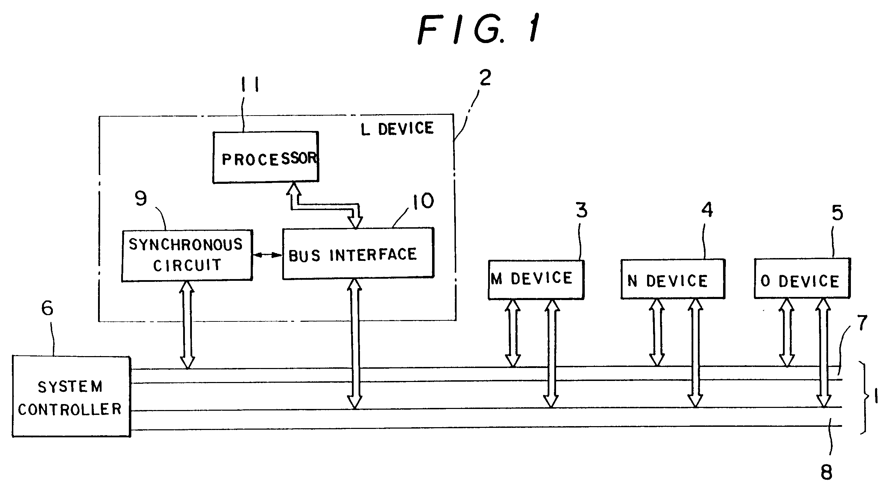

Preferred embodiments of the invention will now be described with reference to the accompanying drawings. The data bus system of Fig. 1, practiced as one embodiment of the invention, comprises a data bus 1, devices 2 through 5 (L through O devices) and a system controller 6.

The data bus 1 contains a control bus 7 and a data bus 8. The control bus 7 is a multiple bit data bus that transfers a frame clock signal A and other control signals. Illustratively, the control bus 7 is a four-bit bus that transfers in parallel the frame clock signal A and a three-bit status signal indicating the write state and other conditions.

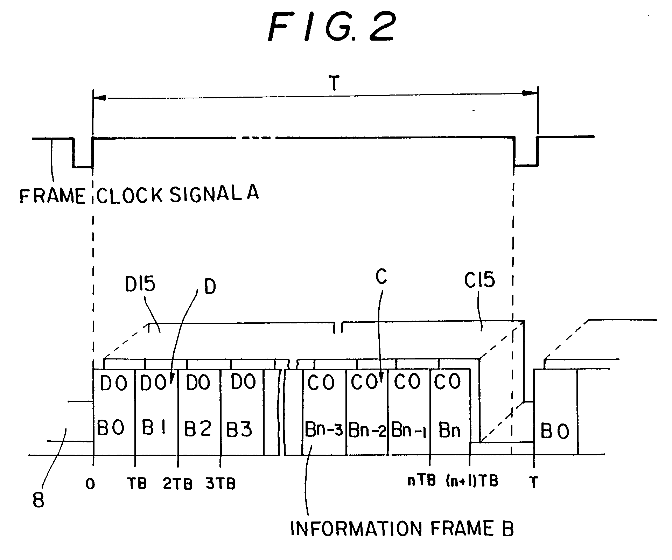

The data bus 8 is a multiple bit bus that transfers not only the data exchanged among the devices 2 through 5 but also control information sent by the system controller 6 to these devices. As depicted in Fig. 2, the data bus 8 is illustratively a 16-bit bus that transfers 16-bit data in parallel, one item at a time.

The devices 2 through 5 may be selected from such functional elements as a digital signal processor, analog-to-digital converting means and memory. Connected to the data bus 1, the devices 2 through 5 may illustratively be assigned device addresses 102 through 105, respectively.

Of these devices, the device 2 (L device) is taken as an example and the construction thereof is described below in more detail:

The device 2 is made of a synchronous circuit 9, a bus interface 10 and a processor 11. The synchronous circuit 9 is connected to the control bus 7. In synchronism with the frame clock signal A on the control bus 7, the synchronous circuit 9 generates a synchronizing signal for operating the bus interface 10.

The bus interface 10 sends and receives data to and from the data bus 8 under control of the synchronous circuit 9.

The processor 11 receives data from the bus interface 10, processes them and sends them back to the bus interface 10 under control of the synchronous circuit 9. The processor 11 may be either a digital signal processor, or a waveform generation circuit for data output only, or a digital-to-analog conversion circuit for data input only.

As shown in Fig. 2, the system controller 6 controls the devices 2 through 5 using the frame clock signal A and the control information contained in an information frame B. The frame clock signal A and the control information are both transferred over the data bus 1.

In the data bus system of the above-described construction, the control bus 7 constituting the data bus 1 always carries the frame clock signal A sent out by the system controller 6. As depicted in Fig. 2, the frame clock signal A is a repeat signal having a period T.

Also as shown in Fig. 2, The data bus 1 carries the information frame B sent out by the system controller 6 within the period T of the frame clock signal A. The information frame B is divided by time into a plurality of blocks.

As depicted, the information block B is illustratively made of a parallel 16-bit structure. A total of (n + 1) blocks B0 through Bn are arranged in the time base direction, each block composed of several bits. The time required to go from the first block B0 to the last block Bn of the information frame B is set to be at least shorter than the period T of the frame clock signal A.

Furthermore, the information frame B comprises data blocks D (a 16-bit structure ranging from block D0 to block D15) and control blocks C (also a 16-bit structure ranging from block C0 to block C15). The data blocks D are used to handle the data exchanged between the data bus 1 and the devices 2 through 5 connected thereto. The control blocks C are used to handle the control information about the devices 2 through 5.

The system controller 6 controls the devices 2 through 5 by sending out such control information as device addresses, block addresses and processing instructions to the control blocks C. While the devices 2 through 5 are being controlled, the block addresses of the information frame B are transferred as control information. Since each block in the information frame B has the same block length, the block addresses may be defined on the time base of the frame clock signal A. That is, if the block time duration of the block B0 is TB, the addresses may be assigned to block B0 through block Bn at intervals of a multiple of TB on the time base of the frame clock signal A.

Under the scheme above, the devices 2 through 5 receive a block address number "n" of the information frame B from the system controller 6. The devices than multiply the block address number "n" by a factor of TB, and count the time duration nTB. In this manner, the block addresses of the information frame B are verified on the time base of the frame clock signal A.

Using the control information sent by the system controller 6, the devices 2 through 5 may freely exchange data therebetween. The only constraint is that two or more devices may not send data to simultaneously to the same data block D of the information frame B.

For example, assume that the device 2 outputs data to the block B1. In this case, the devices 3 through 5 are not allowed to output their data to the block B1. However, the devices 3 through 5 are free to output their data to other blocks D except for the block B1 within the same period of the frame clock signal A.

Meanwhile, the device 2 may receive data from any data blocks D except for the block B1. The devices 3 through 5 are allowed concurrently to receive data from the block B1 to which the device 2 has sent its data.

It is to be noted that the devices 2, 3, 4 and 5 are all equal in priority; none of them takes precedence over the others. The devices 2 through 5, connected to the data bus 1, may each send and receive as many data items as the number of data blocks D, to and from these blocks, while one frame clock pulse A is being in effect.

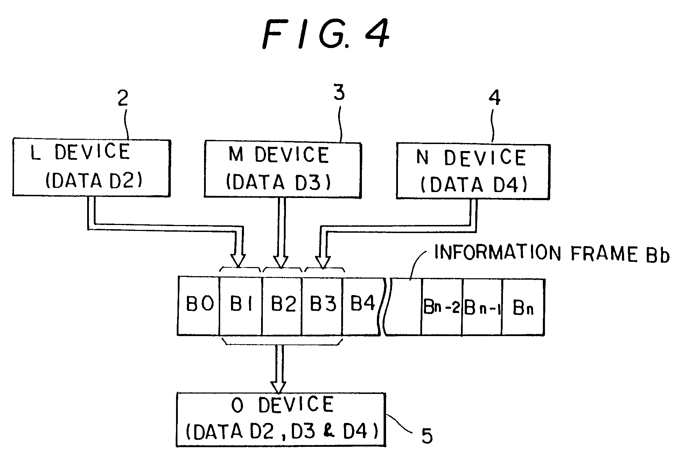

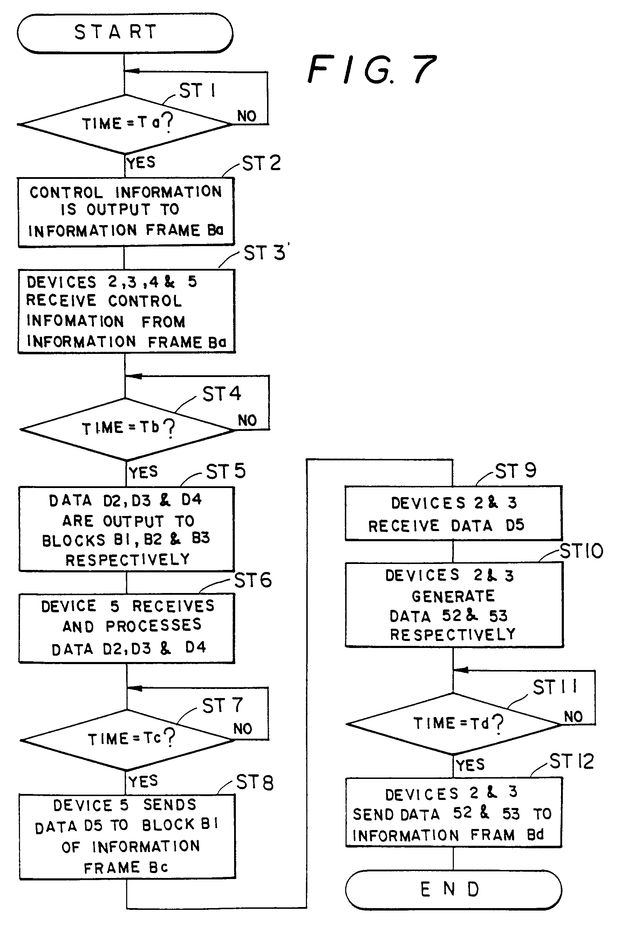

Below is a description of how the embodiment of the above construction operates with reference to the schematic views of Figs. 4 through 6 and to the flowchart of Fig. 7. As an example, this data bus system is assumed to operate broadly as follows: The device 2 through 4 send data to the device 5. The device 5 processes the received data and sends them back to the devices 2 and 3. The devices 2 and 3 in turn process the data received from the device 5 and output them to the data bus 1. What follows is a more detailed description of these operations.

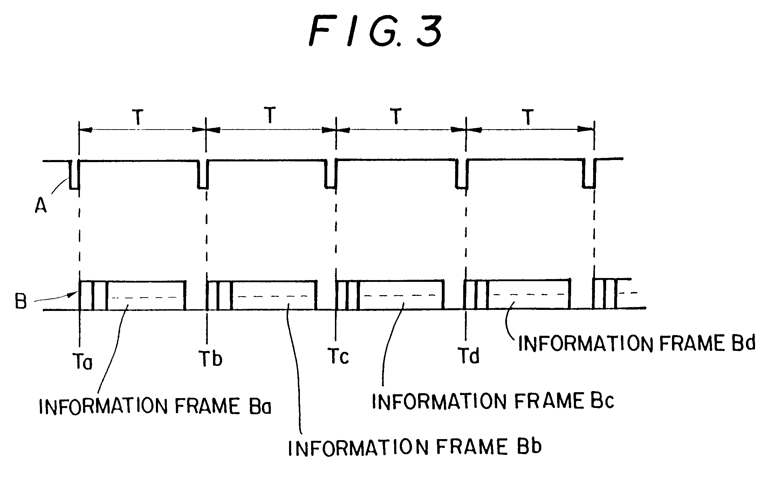

Fig. 3 shows the relationship over time between a plurality of frame clock pulses and a plurality of information frames in connection with the embodiment. At times Ta, Tb, Tc and Td, frame clock pulses A are generated at intervals of T and transferred over the data bus 1. In synchronism with these frame clock pulses, the information frames Ba, Bb, Bc and Bd are transferred over the data bus 1, as illustrated.

Within one period of the frame clock signal A shown in Fig. 2, the data blocks D are transferred in conjunction with blocks B0, B1, B2 and B3 on the earlier side of the time base. The control blocks C are transferred in conjunction with blocks Bn-3, Bn-2, Bn-1 and Bn on the latter side of the time base.

Referring to Fig. 7, step ST1 is first entered and a check is made to see if the time Ta is reached. If the time Ta is found to be reached, step ST2 is entered. In step ST2, the control information to be executed in the data blocks D of the next information frame Bb is transferred by the control blocks C of the information frame Ba on the data bus 1.

That is, in step ST2, the control blocks C transfer four kinds of control information: (1) control information that tells the device 2 having the device address 102 to output data D2 to the block B1 of the information frame B; (2) control information that tells the device 3 having the device address 103 to output data D3 to the block B2; (3) control information that tells the device 4 having the device address 104 to output data D4 to the block B3; and (4) control information that tells the device 5 having the device address 105 to receive data D2, D3 and D4 from the blocks B1, B2 and B3.

In step ST3, the device 2 having the designated device address receives its control information from the control blocks C of the information frame Ba in synchronism with the frame clock signal A. The information is received in preparation for the execution in the next information frame Bb. Likewise, the devices 3, 4 and 5 receive their respective control information carried by the control blocks C at a frame clock pulse A one period earlier.

In step ST4, a check is made to see if the time Tb is reached. If the time Tb is found to be reached, step ST5 is entered. In step ST5, as shown in Fig. 4, the devices 2, 3 and 4 send the data D2, D3 and D4 respectively to the blocks B1, B2 and B3 of the information frame Bb according to the control information and in synchronism with the frame clock signal A.

In step ST6, the device 5 receives the data D2, D3 and D4 from the blocks B1, B2 and B3 for processing.

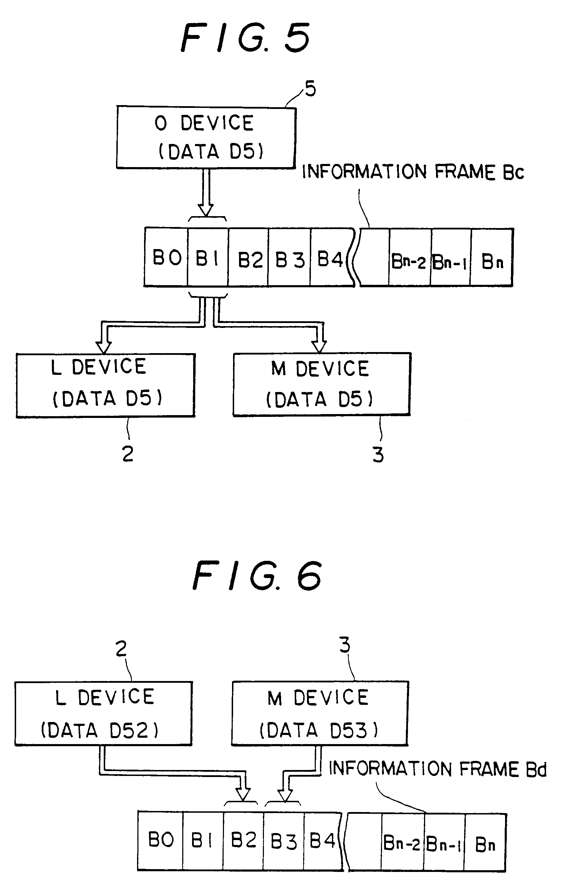

In step ST7, a check is made to see if the time Tc is reached. If the time Tc is found to be reached, step ST8 is entered. In step ST8, the device 5 sends the data D5 to the block B1 of the information frame Bc according to the control information, as depicted in Fig. 5. In step ST9, the devices 2 and 3 receive the data D5 from the block B1.

After receiving the data D5, the devices 2 and 3 enter step ST10. There, the devices 2 and 3 process the received data and generate data D52 and D53 accordingly.

In step ST11, a check is made to see if the time Td is reached. If the time Td is found to be reached, step ST12 is entered. In step ST12, as illustrated in Fig. 6, the devices 2 and 3 send the data D52 and D53 respectively to the blocks B2 and B3 of the information frame Bd in accordance with the control information. This completes the representative flow of operations performed by the embodiment.

As described, the above-described embodiment allows a plurality of devices freely to exchange data therebetween. The only constraint is that two or more devices may not send their data simultaneously to the same data block.

In the embodiment above, the data bus 1 is illustratively composed of the control bus 7 and the data bus 8. The control bus 7 transfers the frame clock signal A and the status information, and the data bus 8 carries input/output data and the device control information.

An alternative embodiment of the invention may involve having the control bus 7 transfer all device control information while the data bus 8 is used to carry input/output information.

As described, the data bus system according to the invention easily configures a complex system comprising a large number of devices. In this data bus system, the component devices are combined flexibly and the data flow therebetween is manipulated freely and in a highly adaptable manner. In such setup, the system controller need only place simple control information onto the data bus.

As many apparently different embodiments of this invention may be made without departing from the spirit and scope thereof, it is to be understood that the invention is not limited to the specific embodiments thereof except as defined in the appended claims.

## Claims

1. A data bus system having a data bus to which a plurality of devices are connected to transfer a synchronizing signal therethrough, said devices exchanging data therebetween via said data bus in accordance with control signals from a controller for controlling said system;

   said data bus using a constant period frame clock signal as said synchronizing signal to transfer, during a period of said frame clock signal, an information frame divided by time into a plurality of blocks having block addresses defined thereto on the time base of said period;

   said plurality of devices sending and receiving data to and from said information frame transferred over said data bus in synchronism with said frame clock signal;

   said controller selecting any of said plurality of devices and notifying the selected devices of the block addresses of destination blocks in said information frame, said destination blocks sending and receiving data to and from said selected devices;

   said selected devices sending and receiving data via said data bus to and from the blocks having the block addresses designated by said controller.

2. A data bus system according to claim 1, wherein said information frame comprises data blocks and control blocks, said data blocks handling input/output data of said devices connected to said data bus system, said control blocks handling the control information for controlling said devices.

3. A data bus system according to claim 2, wherein said data blocks and said control blocks are placed respectively on the earlier and the latter sides of the time base in said control frame.

4. A data bus system according to claim 2, wherein said control blocks transfer the control information to be executed in synchronism with contiguous frame clock pulses on the time base of said frame clock signal.

5. A data bus system according to claim 1, wherein the time required to go from the first to the last of the blocks constituting one information frame is at least shorter than the period of said frame clock signal, said blocks having the same block length each.

6. A data bus system according to claim 1, wherein each of said devices comprises a synchronous circuit, a bus interface and a processor; said synchronous circuit generating a synchronizing signal in synchronism with said frame clock signal; said bus interface sending and receiving data to and from said data bus under control of said synchronous circuit; said processor receiving data from said bus interface, processing them, and sending them back to said bus interface.

7. A data bus system according to claim 1, wherein said devices are allowed to send and receive data simultaneously to and from any number of data blocks, except that any plurality of said devices are not allowed to output data simultaneously to the same data block.

# F I G. 1

L DEVICE

PROCESSOR

BUS INTERFACE

SYNCHRONOUS CIRCUIT

M DEVICE

N DEVICE

O DEVICE

SYSTEM CONTROLLER

# FIG. 2

FRAME CLOCK SIGNAL A

INFORMATION FRAME B

EP 0 509 140 A1

# FIG. 3

EP 0 509 140 A1

# FIG. 4

L DEVICE
(DATA D2)

M DEVICE
(DATA D3)

N DEVICE
(DATA D4)

INFORMATION FRAME Bb

| B0 | B1 | B2 | B3 | B4 | Bn-2 | Bn-1 | Bn |

O DEVICE
(DATA D2, D3 & D4)

EP 0 509 140 A1

# F I G. 5

O DEVICE
(DATA D5)

5

INFORMATION FRAME Bc

| B0 | B1 | B2 | B3 | B4 | | Bn-2 | Bn-1 | Bn |

L DEVICE
(DATA D5)

2

M DEVICE
(DATA D5)

3

# F I G. 6

2

L DEVICE
(DATA D52)

3

M DEVICE
(DATA D53)

INFORMATION FRAME Bd

| B0 | B1 | B2 | B3 | B4 | | Bn-2 | Bn-1 | Bn |

# FIG. 7

START

ST 1
TIME = Ta? —NO→

↓ YES

ST 2
CONTROL INFORMATION
IS OUTPUT TO
INFORMATION FRAME Ba

ST 3'
DEVICES 2,3,4 & 5
RECEIVE CONTROL
INFOMATION FROM
INFORMATION FRAME Ba

ST 4
TIME = Tb? —NO→

↓ YES

ST 5
DATA D2, D3 & D4
ARE OUTPUT TO
BLOCKS B1, B2 & B3
RESPECTIVELY

ST 6
DEVICE 5 RECEIVES
AND PROCESSES
DATA D2, D3 & D4

ST 7
TIME = Tc? —NO→

↓ YES

ST 8
DEVICE 5 SENDS
DATA D5 TO BLOCK B1
OF INFORMATION
FRAME Bc

ST 9
DEVICES 2 & 3
RECEIVE DATA D5

ST 10
DEVICES 2 & 3
GENERATE
DATA 52 & 53
RESPECTIVELY

ST 11
TIME = Td? —NO→

↓ YES

ST 12
DEVICES 2 & 3
SEND DATA 52 & 53 TO
INFORMATION FRAM Bd

END

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | WO-A-8 801 121 (NCR CORPORATION)<br>* abstract *<br>* page 5, line 33 - page 7, line 30 *<br>* page 11, line 8 - page 12, line 16 *<br>* claims 1,2 *<br>--- | 1,7 | G06F13/42 |
| Y | WO-A-8 603 090 (AT&T)<br>* page 2, line 20 - page 3, line 36 *<br>* claim 1 *<br>--- | 1,7 | |
| A | EP-A-0 159 941 (LA TELEMECANIQUE ELECTRIQUE)<br>* abstract *<br>* page 3, line 9 - page 4, line 33 *<br>* page 14, line 9 - line 23; figures 3A,B,C *<br>--- | 1-7 | |
| A | EP-A-0 185 348 (HONEYWELL INC.)<br>* page 3, line 1 - page 6, line 21 *<br>----- | 1-7 | |
| | | | **TECHNICAL FIELDS SEARCHED (Int. Cl.5 )**<br><br>G06F |

The present search report has been drawn up for all claims

| Place of search | Date of completion of the search | Examiner |
|---|---|---|
| THE HAGUE | 31 JULY 1992 | MCDONAGH F.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)